# DEMANDE DE BREVET EUROPEEN

(11) **EP 2 208 894 A1**
(43) Date de publication de la demande: **21.07.2010**
(21) Numéro de dépôt: 09180448.4
(22) Date de dépôt: 22.12.2009
(51) Int. Cl.: F16B 1/00, F16B 17/00

(54) **Élément de blocage réutilisable d'une pièce mobile d'un organe, notamment lors de la mise en place de celui-ci et organe muni d'un tel élément**

(30) Priorité: 16.01.2009 FR 0950267
(71) Demandeur: Peugeot Citroën Automobiles SA, 78140 Vélizy-Villacoublay (FR)
(72) Inventeur: Henri, Régis, 78790, MULCENT (FR)
(74) Mandataire: Vigand, Régis Louis Michel

(57) **Abrégé**

L'invention concerne un élément de blocage réutilisable d'une pièce mobile d'un organe, notamment lors de la mise en place de l'organe et organe muni d'un tel élément.

Cet élément de blocage est **caractérisé en ce que** sa tête (9) comprend une partie auxiliaire (10a, 11a, 12a) de blocage conformée comme la partie de blocage (10, 11, 12) et capable d'assurer une seconde utilisation de l'élément (6) en tant qu'élément de blocage (6).

Application dans le domaine des organes comportant une pièce mobile. Une application particulière mais non limitative peut être envisagée pour les commutateurs de véhicule automobile, notamment un commutateur de colonne de direction.

## Description

La présente invention concerne, d'une façon générale, un élément de blocage réutilisable d'une pièce mobile d'un organe, notamment lors de la mise en place de celui-ci et un organe muni d'un tel élément.

Lors de la manipulation d'un organe comportant une pièce mobile, notamment lors de la mise en place de celui-ci sur un support, il est fréquent, pour faciliter cette manipulation, de bloquer cette pièce par rapport au reste de l'organe.

Un exemple de la présente invention peut être illustré par un commutateur électrique comportant un actionneur pour établir les divers contacts électriques requis lors du fonctionnement de ce commutateur. Il est bien entendu, cependant, que la présente invention n'est pas limitée à un élément de blocage pour un commutateur électrique.

Plus particulièrement, un tel commutateur électrique peut, par exemple, être destiné de façon non limitative à un véhicule automobile, notamment en tant que commutateur de tableau de bord et, plus précisément, en tant que commutateur électrique disposé autour du volant.

Un tel commutateur électrique comprend en général des circuits de commutation pouvant être activés par l'utilisateur, par action d'un ou de plusieurs leviers ou d'une ou de plusieurs touches. Ces commutations se font par l'intermédiaire de contacteurs disposés sur un actionneur, formant la pièce mobile du commutateur. Lors du montage du commutateur en position de travail, il est nécessaire de maintenir l'actionneur dans une position prédéterminée pour éviter tout court-circuit ou contact intempestif. Cette position est, avantageusement, la position neutre de celui-ci.

Il est connu de maintenir l'actionneur portant les contacteurs d'un commutateur dans une position préétablie par l'utilisation d'un élément de blocage. Un tel élément peut être sous la forme d'une goupille. Cette goupille, partiellement insérée dans un logement prévu respectivement dans l'actionneur et dans le commutateur, permet de bloquer ce premier élément en position par rapport au second. Une telle goupille peut être maintenue en position par adhésif ou par matriçage thermique avec les parois du logement. Elle peut être enlevée par cisaillement, c'est à dire que sa partie extérieure au logement est cassée, volontairement par l'opérateur ou lors de la première utilisation du commutateur, afin d'assurer le déblocage de l'actionneur.

Pour assurer un cisaillage facilité, un tel élément de blocage peut comprendre une ligne de moindre résistance.

L'élément de blocage de l'actionneur peut revêtir d'autres formes que celle d'une goupille simple à une patte traversant consécutivement le commutateur et l'actionneur. Elle peut être par exemple sous la forme d'une goupille à deux pattes, une patte pénétrant dans l'actionneur tandis que l'autre est logée dans un évidement du commutateur, les deux pattes étant solidarisées ensemble.

Il arrive cependant qu'un tel élément de blocage se casse de manière non souhaitée, par exemple par sa partie non introduite dans l'actionneur ou le commutateur. Dans ce cas, il est difficilement accessible de l'extérieur à un opérateur tandis que la partie restante de cet élément peut encore être en position de blocage à l'intérieur du logement prévu dans l'actionneur. De ce fait, cet élément ne peut plus être débloqué facilement par l'opérateur.

Cela peut rendre un commutateur neuf en phase de montage inutilisable.

Les documents JP-A-2004/362974 et JP-A-2006/032324 décrivent des dispositifs d'aide au montage de commutateurs de commande avec une goupille provisoire selon l'état de la technique précédemment indiqué. Cette goupille sert pour le maintien de l'actionneur rotatif en position dans ce commutateur lors du montage de ce dernier. Dans ces documents, aucune goupille ne présente la possibilité d'être réutilisée en cas de casse intempestive de celle-ci.

Le problème à la base de l'invention est de permettre la réutilisation de l'élément de blocage en position d'une pièce mobile d'un organe par rapport à ce dernier, cette réutilisation pouvant notamment avoir lieu quand l'élément de blocage a été accidentellement cassé après avoir été mis en position de blocage.

A cet effet, l'invention a pour objet un élément de blocage en position d'une pièce mobile d'un organe, cet élément comprenant au moins une partie de blocage destinée à être introduite dans ladite pièce mobile afin de permettre son blocage par rapport audit organe et une tête destinée à être placée en dehors desdits organe et pièce en position de blocage dudit élément, **caractérisé en ce que** sa tête comprend une partie auxiliaire de blocage conformée comme la partie de blocage et capable d'assurer une seconde utilisation de l'élément en tant qu'élément de blocage.

Selon des caractéristiques additionnelles de la présente invention :
- la partie de blocage et la partie auxiliaire comprennent au moins une patte susceptible d'être introduite dans la pièce mobile et l'organe,
- sa partie de blocage et sa partie auxiliaire comprennent chacune une première patte susceptible d'être introduite au moins partiellement dans l'organe et une seconde patte susceptible d'être introduite au moins partiellement dans la pièce mobile, les première et seconde pattes étant, pour chacune desdites parties, solidarisées ensemble par une partie de liaison,
- sa tête comprend une partie formant oeillet pour faciliter la manipulation, cette partie formant oeillet étant disposée entre la partie de blocage et la partie auxiliaire de la tête,
- la partie de blocage ou la partie auxiliaire peuvent être séparées de la tête, notamment par cisaillage le long d'une ligne de moindre résistance.

L'invention concerne également un organe présentant un cadre et une pièce mobile devant être bloquée en position, **caractérisé en ce qu**'il comprend au moins provisoirement un tel élément de blocage, cet élément étant logé au moins partiellement dans des évidements respectifs dans le cadre et la pièce mobile.

Avantageusement, le cadre de l'organe présente un logement auxiliaire pour la réception de la partie auxiliaire de l'élément de blocage et sa pièce mobile présente au moins un logement auxiliaire pour la réception de la partie auxiliaire de l'élément de blocage.

Avantageusement, l'organe est un commutateur électrique comprenant un boîtier en tant que cadre dans lequel est logé au moins un actionneur d'au moins un contacteur, cet actionneur formant la pièce mobile et disposant d'une liberté de mouvement par rapport au boîtier.

Avantageusement, l'actionneur est mobile en rotation à l'intérieur du boîtier du commutateur.

L'invention concerne enfin une colonne de direction d'un véhicule automobile, caractérisée en ce qu'un tel commutateur électrique est disposé autour de ladite colonne.

L'invention va maintenant être décrite plus en détail mais de façon non limitative en regard des figures annexées, dans lesquelles :
- la figure 1 est une représentation schématique d'une vue avant en perspective d'un commutateur électrique avec un élément de blocage selon l'état de la technique,
- la figure 2 est une représentation schématique d'une vue de côté d'une forme de réalisation, conforme à la présente invention, d'un élément de blocage réutilisable d'un actionneur d'un commutateur électrique,
- la figure 3 est une représentation schématique d'une vue de côté en perspective d'un commutateur électrique recevant l'élément de blocage de la figure 2, avec réutilisation de cet élément de blocage en cas de casse accidentelle de cet élément.

Dans ce qui va suivre, l'organe à pièce mobile destiné à recevoir l'élément de blocage de cette dernière va être un commutateur électrique.

Il convient de remarquer que la présente invention peut s'appliquer à tout type d'organe, celui-ci devant présenter une pièce mobile qu'il convient de bloquer. Cette pièce mobile peut être tournante, mobile en translation ou en oscillation par rapport au corps de l'organe. De même cet organe peut remplir différentes fonctions et pas seulement dans le domaine électrique.

Aussi, la présente invention peut s'appliquer à tout organe dont il convient de bloquer provisoirement la pièce mobile en position, notamment mais pas exclusivement lors du montage de cet organe en position de travail.

De même, le commutateur qui va être décrit est destiné notamment à être fixé sur la colonne de direction d'un véhicule automobile. Ceci n'est qu'une application parmi tant d'autres d'un organe selon la présente invention sans effet limitatif sur celle-ci.

Quand la présente invention concerne un commutateur électrique présent dans un véhicule automobile, celui-ci peut être un commutateur de tableau de bord mais aussi tout type de commutateur présentant un actionneur d'au moins un contacteur, cet actionneur pouvant tourner ou se translater par rapport au boîtier de ce commutateur électrique.

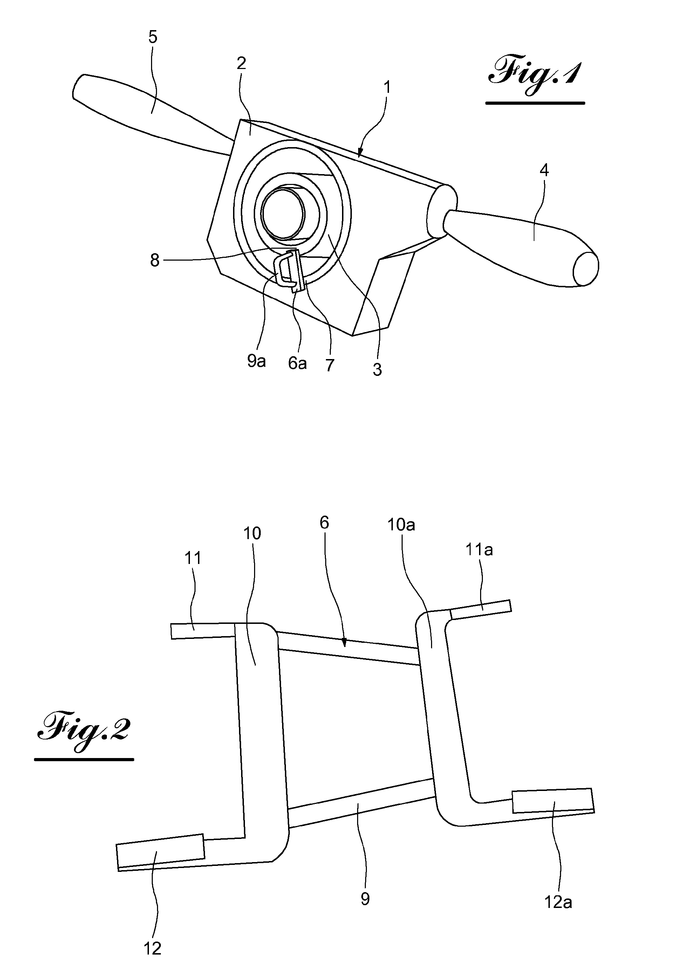

La figure 1 montre un commutateur 1 électrique de colonne de direction. Ce commutateur 1 comprend un boîtier 2 entourant un actionneur 3 de plusieurs contacteurs. Il est muni de deux leviers de manoeuvre 4 et 5 assurant diverses fonctions nécessaires ou auxiliaires pour la conduite du véhicule.

Un tel commutateur sur colonne de direction, notamment à proximité du volant du véhicule automobile, permet au conducteur d'établir différentes fonctions sans avoir à lever les mains du volant. Les diverses fonctions utilisées sont, par exemple, la manoeuvre de feux clignotants, la marche d'essuie-glace ou le passage entre diverses possibilités d'éclairage du véhicule comme feux de code ou feux de route, ainsi que de commande d'une régulation de vitesse ou de passage de vitesses, de génération de signaux acoustiques ou optiques etc...

Dans un tel commutateur 1, l'actionneur 3 est monté de manière tournante dans le boîtier 2. Dans d'autres types de commutateur, l'actionneur est monté de manière à pouvoir être translaté dans le boîtier du commutateur. La présente invention s'applique à ces deux cas de figure.

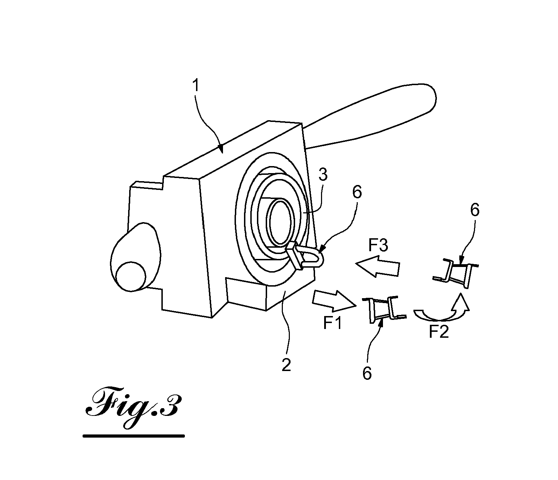

Pour empêcher lors du montage du commutateur 1 l'actionneur 3 de tourner, il est prévu un élément de blocage en position 6a de cet actionneur, cet élément de blocage montré à cette figure étant connu de l'état de la technique. Comme il sera vu aux figures 2 et 3, la partie de blocage étant la même pour l'état de la technique que pour l'élément de blocage selon la présente invention, cet élément de blocage connu comprend deux pattes, la première patte pénétrant dans un logement 7 prévu sur le boîtier 2 et la seconde dans un logement 8 prévu sur l'actionneur 3. Ces deux pattes étant solidaires, l'actionneur 3 est ainsi bloqué par rapport au boîtier 2 du commutateur 1, notamment avant le montage du volant.

Dans une autre forme de réalisation connue d'un tel élément de blocage, non montrée aux figures, celui-ci peut aussi être sous la forme d'une goupille simple dont la partie active de blocage traverse d'abord le boîtier pour s'insérer ensuite dans l'actionneur. Ceci est possible dans les zones où il y a superposition du boîtier au dessus de l'actionneur.

Après montage du commutateur 1 sur la colonne de direction, l'actionneur 3 est libéré de l'élément de blocage 6a connu, soit par destruction partielle de cet élément, notamment par cisaillage par l'opérateur ou lors de la première mise en fonction de l'actionneur, une ligne de moindre résistance étant avantageusement prévue sur l'élément dans ces deux cas.

A la figure 1, l'élément de blocage 6a connu comprend une tête 9a présentant un oeillet pour une meilleure manipulation de cet élément. Lors d'une casse accidentelle de cet élément de blocage, une fois partiellement positionné dans l'actionneur 3 et le boîtier 2 du commutateur 1, par exemple par détachement des pattes introduites dans l'actionneur 3 et le boîtier 2 de la tête 9a de cet élément, il peut se produire que l'actionneur 3 soit toujours bloqué en position et qu'il ne soit pas possible de sortir l'élément de blocage 6a connu de sa position de blocage dans l'actionneur 3. Ainsi, un commutateur 1 neuf est rendu inutilisable, doit être démonté et changé ce qui entraîne une perte de temps et de coût.

La conception de l'élément de blocage 6a connu montré à cette figure ne permet pas une possible réutilisation. Cela est, par contre, possible avec l'élément de blocage conformément à la présente invention qui va être décrit ci-après.

La figure 2 montre une vue de côté d'une forme de réalisation conforme à la présente invention d'un élément de blocage 6 réutilisable d'un actionneur d'un commutateur et la figure 3 montre une vue de côté en perspective d'un commutateur 1 recevant l'élément 6 de blocage de la figure 2, avec réutilisation de cet élément 6 de blocage en cas de casse accidentelle de cet élément.

En se référant à ces figures, conformément à l'invention, l'élément de blocage 6 en position d'une pièce mobile d'un organe, la pièce mobile étant l'actionneur 3 et l'organe le commutateur 1, cet élément 6 comprenant au moins une partie de blocage référencée 10, 11 et 12 à la figure 3, destinée à être introduite dans ladite pièce mobile afin de permettre son blocage par rapport audit organe et une tête 9 destinée à être placée en dehors desdits organe et pièce en position de blocage dudit élément 6, est **caractérisé en ce que** sa tête 9 comprend une partie auxiliaire 10a, 11a et 12a de blocage conformée comme la partie de blocage 10, 11 et 12 et capable d'assurer une seconde utilisation de l'élément 6 en tant qu'élément de blocage.

A la figure 2, l'élément de blocage 6 en position de l'actionneur comprend une première partie de blocage, introduite dans le boîtier du commutateur et l'actionneur. Cette première partie de blocage est composée d'une première patte 11, introduite dans l'actionneur en position de blocage, et d'une seconde patte 12, introduite dans le boîtier du commutateur en position de blocage.

Ces deux pattes 11 et 12 sont solidarisées par une entretoise 10 s'appuyant sensiblement sur le boîtier et l'actionneur en position de blocage en formant une des extrémités de la tête 9 de l'élément de blocage 6.

A l'extrémité opposée de la tête 9 de l'élément se trouve une seconde entretoise 10a qui porte une partie auxiliaire, munie de deux pattes 11a et 12a. Cette partie auxiliaire peut servir de seconde partie de blocage de l'élément 6 à condition de retourner cet élément 6 par rapport au commutateur comme il sera vu à la figure 3.

Avantageusement, la patte 11, destinée à être introduite dans l'actionneur est plus courte que la patte 12, destinée à être introduite dans le boîtier du commutateur. Ces pattes 11 et 12 peuvent aussi présenter des moyens permettant une adhésion renforcée avec les parois du logement respectif, par exemple des membrures d'extension radiale qui se mettent en prise avec lesdites parois.

Comme un élément de blocage de l'état de la technique, la tête 9 de l'élément de blocage 6 peut comporter un oeillet central pour faciliter sa manipulation, par exemple pour l'introduction d'un doigt de l'opérateur ou pour sa préhension par celui-ci lors du cisaillage de cet élément.

A la figure 3, en cas de casse accidentelle de la partie de blocage de l'élément 6, celui-ci est retiré du contact avec le logement respectif du boîtier 2 et de l'actionneur 3 selon la flèche F1. Comme la première partie de blocage, montrée sous les références 11 et 12 à la figure 2, est hors d'usage, l'élément 6 de blocage est alors retourné selon la flèche F2 pour mettre en position d'insertion future la partie auxiliaire de blocage, référencée 11a et 12a à la figure 2. Cette partie auxiliaire est alors dirigée vers le boîtier 2 du commutateur 1 et l'actionneur 3 et les pattes de cette partie sont introduites dans leur logement respectif dans le boîtier 2 et l'actionneur 3 selon la flèche F3.

Comme il est possible que les logements du boîtier 2 et de l'actionneur 3 soient bouchés par des parties cassées des pattes de la première partie de blocage de l'élément 6, il est avantageux de prévoir sur ledit boîtier 2 et/ou l'actionneur 3 des logements auxiliaires avec le même espacement entre eux que pour les logements ayant reçu la première partie de blocage de l'élément afin qu'ils reçoivent les pattes de la partie auxiliaire de blocage de l'élément 6.

Les avantages de la présente invention sont nombreux. On pourra citer, entre autres, une possibilité de récupération d'un commutateur neuf qui était hors d'usage du fait de la rupture de l'élément de blocage, un gain de temps et de coût obtenu avec un élément de blocage présentant un prix réduit de reconception.

L'invention n'est nullement limitée au mode de réalisation décrit et illustré qui n'a été donné qu'à titre d'exemple.

## Revendications

1. Elément de blocage (6) en position d'une pièce mobile (3) d'un organe (1), cet élément (6) comprenant au moins une partie de blocage (10, 11, 12) destinée à être introduite dans ladite pièce mobile (3) afin de permettre son blocage par rapport audit organe (1) et une tête (9) destinée à être placée en dehors desdits organe (1) et pièce (3) en position de blocage dudit élément (6), **caractérisé en ce que** sa tête (9) comprend une partie auxiliaire (10a, 11a, 12a) de blocage conformée comme la partie de blocage (10, 11, 12) et capable d'assurer une seconde utilisation de l'élément (6) en tant qu'élément de blocage (6).

2. Elément de blocage (6) en position selon la revendication 1, **caractérisé en ce que** la partie de blocage (10, 11, 12) et la partie auxiliaire (10a, 11a, 12a) comprennent au moins une patte susceptible d'être introduite dans la pièce mobile (3) et l'organe (1).

3. Elément de blocage (6) en position selon la revendication 1, **caractérisé en ce que** sa partie de blocage (10, 11, 12) et sa partie auxiliaire (10a, 11a, 12a) comprennent chacune une première patte (12, 12a) susceptible d'être introduite au moins partiellement dans l'organe (1) et une seconde patte (11, 11a) susceptible d'être introduite au moins partiellement dans la pièce mobile (3), les premières et seconde pattes étant, pour chacune desdites parties, solidarisées ensemble par une partie de liaison (10, 10a).

4. Elément de blocage (6) en position selon l'une quelconque des revendications précédentes, **caractérisé en ce que** sa tête (9) comprend une partie formant oeillet pour faciliter la manipulation, cette partie formant oeillet étant disposée entre la partie de blocage (10, 11, 12) et la partie auxiliaire (10a, 11a, 12a) de la tête (9).

5. Elément de blocage (6) en position selon l'une quelconque des revendications précédentes, **caractérisé en ce que** la partie de blocage (10, 11, 12) ou la partie auxiliaire (10a, 11a, 12a) peuvent être séparées de la tête (9), notamment par cisaillage le long d'une ligne de moindre résistance.

6. Organe (1) présentant un cadre (2) et une pièce mobile (3) devant être bloquée en position, **caractérisé en ce qu'**il comprend au moins provisoirement un élément de blocage (6) selon l'une quelconque des revendications précédentes, cet élément (6) étant logé au moins partiellement dans des évidements (7, 8) respectifs dans le cadre (2) et la pièce mobile (3).

7. Organe (1) selon la revendication précédente **caractérisé en ce que** son cadre (2) présente un logement auxiliaire pour la réception de la partie auxiliaire (10a, 11a, 12a) de l'élément de blocage (6) et que sa pièce mobile (3) présente au moins un logement auxiliaire pour la réception de la partie auxiliaire (10a, 11a, 12a) de l'élément de blocage (6).

8. Organe (1) selon la revendication 6 ou 7,
**caractérisé en ce qu'**il est un commutateur électrique (1) comprenant un boîtier (2) en tant que cadre dans lequel est logé au moins un actionneur (3) d'au moins un contacteur, cet actionneur formant la pièce mobile (3) et disposant d'une liberté de mouvement par rapport au boîtier (2).

9. Commutateur (1) selon la revendication précédente, **caractérisé en ce que** l'actionneur (3) est mobile en rotation à l'intérieur du boîtier (2) du commutateur (1).

10. Colonne de direction d'un véhicule automobile, **caractérisée en ce qu'**un commutateur (1) selon l'une quelconque des revendications 8 ou 9 est disposé autour de ladite colonne.
